# EUROPÄISCHE PATENTSCHRIFT

(11) **EP 1 881 879 B1**
(45) Veröffentlichungstag und Bekanntmachung des Hinweises auf die Patenterteilung: **06.07.2011**
(21) Anmeldenummer: 06791510.8
(22) Anmeldetag: 12.05.2006
(51) Int. Cl.: B23K 11/00, B23K 11/06, F01N 3/022, B01D 39/12, B22F 3/00, B23K 101/32, B23K 101/00

(54) **VERFAHREN UND VORRICHTUNG ZUM VERSCHWEISSEN METALLISCHER FASERN ZU EINEM VLIES DURCH MEHRMALIGE DURCHFÜHRUNGEN EINES SCHWEISSPROZESSES ; WABENKÖRPER MIT VLIESEN UMFASSEND KREUZEND GESCHWEISSTE METALLISCHE FASERN**
METHOD AND DEVICE FOR WELDING METALLIC FIBERS TO FORM A FLEECE BY REPEATEDLY CARRYING OUT A WELDING PROCESS ; HONEYCOMB WITH METALLIC FIBERS FLEECES COMPRISING CROSSED WELDS
PROCEDE ET DISPOSITIF DE SOUDAGE DE FIBRES METALLIQUES POUR OBTENIR UN MATELAS DE FIBRES, PAR EXECUTION REPETEE D'UN PROCESSUS DE SOUDAGE ; NID D'ABEILLES AVEC DES MATELAS COMPORTANT DES FIBRES METALLIQUES AVEC DES SOUDURES SE CROISANT

(30) Priorität: 17.05.2005 DE 102005023384
(43) Veröffentlichungstag der Anmeldung: 30.01.2008
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HAESEMANN, Gottfried Wilhelm, 51515 Kürten (DE)
(74) Vertreter: Rössler, Matthias
(86) Internationale Anmeldenummer: PCT/EP2006/004482
(87) Internationale Veröffentlichungsnummer: WO 2006/136240

(56) Entgegenhaltungen:
- EP-A- 0 411 421
- DE-C- 355 662
- FR-A- 2 815 808
- US-A- 2 065 546
- US-A- 3 026 404
- US-A- 5 425 236
- US-A1- 2004 247 927
- PATENT ABSTRACTS OF JAPAN Bd. 1997, Nr. 02, 28. Februar 1997 (1997-02-28) -& JP 08 284279 A (TOYO ELECTRIC MFG CO LTD), 29. Oktober 1996 (1996-10-29)

## Beschreibung

Die vorliegende Erfindung betrifft ein Verfahren zur Herstellung eines Vlieses aus metallischen Fasern, eine Vorrichtung zum Verschweißen von metallischen Fasern und einen

Wabenkörper gemäß dem Oberbegriff des Anspüche 1, 5 und 14 (siehe EP 0 411 421 A). Im Interesse der Umwelt ist es erforderlich, von Verbrennungskraftmaschinen erzeugtes Abgas hinsichtlich der darin enthaltenen Schadstoffe nachzubehandeln. Dabei ist bekannt, dass Abgas bezüglich der darin enthaltenen gasförmige und/oder festen Bestandteile zu reinigen. Dazu können katalytisch motivierte, chemische Reaktionen ebenso zum Einsatz gelangen wie Filtervorgänge, um zumindest temporär feste Bestandteile des Abgases, wie beispielsweise Ruß oder Asche, zurückzuhalten. Dazu durchströmt das Abgas üblicherweise mindestens eine Abgasbehandlungseinheit, wie beispielsweise einen katalytischen Konverter, einen Adsorber, eine Partikelfalle und dergleichen. Im Hinblick auf die einsetzbaren Filtermedien ist ebenfalls bekannt, gasdurchlässige metallische Faservliese einzusetzen. Die vorliegende Erfindung betrifft insbesondere die Herstellung eines Faservlieses für diesen Einsatzzweck.

Aus der EP 0 411 421 A ist ein Verfahren zur Herstellung eines Filters aus mehreren Lagen von Drähten bekannt, wobei die Drähte durch Rollnaht-Schweißen miteinander verbunden werden.

US 3,026,404 offenbart eine Vorrichtung für das Schweißen von Profilen, wobei durch Rollnahtschweißen erzeugte Schweißnähte nebeneinander angeordnet sind, aber in nachfolgenden Stationen aufgebracht werden. Ein entsprechendes Verfahren ist auch aus der US-Al-2,065,546 bekannt.

DE-C1-355662 offenbart eine Schweißmaschine zum Schweißen von Gittern, wobei mehrere Elektrodenpaare zum gleichzeitigen Schweißen mehrerer Kreuzungspunkte des Gitters vorgesehen sein können.

Aufgrund der intertnittierenden Verbrennung in solchen Verbrennungskraftmaschinen, wie beispielsweise Otto- oder Dieselmotoren, treten im Abgassystem erhebliche thermische und dynamische Belastungen für ein solches Faservlies auf. Deshalb ist es erforderlich, derartige Faservliese mit einer besonders hohen Festigkeit auszuführen, um ein herauslösen von Fasern während des Betriebes zu vermeiden. Dies hätte einerseits zur Folge, dass die gewünschte Filterwirkung des Faservlieses nicht dauerhaft aufrechterhalten werden kann, andererseits gefährden die herausgelösten Fasern unter umständen nachgeordnete Abgasreinigungseinheiten oder sogar die Personen in der Umgebung.

Bei der Herstellung solcher Faservliese sind Verfahren bekannt, bei denen Schweißverbindungen und/oder Sinterverbindungen zwischen den Fasern des Vlieses ausgebildet werden. Im Hinblick auf eine kontinuierliche Fertigung solcher Faservliese im Serienbetrieb sollen bevorzugt Schweißverfahren eingesetzt werden, da diese mit einer hohen Geschwindigkeit ausgeführt werden können. Dabei hat sich jedoch gezeigt, dass nicht mit ausreichender Prozesssicherheit Schweißverbindungen im gewünschten Umfang erzeugt werden können.

Hiervon ausgehend ist es Aufgabe der vorliegenden Erfindung, die mit Bezug auf den Stand der Technik geschilderten technischen Probleme zumindest teilweise zu lindern. Insbesondere ist es hier Aufgabe, ein Verfahren zur Herstellung eines Vlieses aus metallischen Fasern sowie eine Vorrichtungen zum Verschweißen von metallischen Fasern anzugeben, die prozesssicher und auch im Rahmen einer Serienfertigung an ausreichend vielen Stellen des Vlieses Schweißverbindungen generieren. Dabei soll ein Faservlies bereitgestellt werden, das insbesondere den thermischen und dynamischen Beanspruchungen im Abgassystem einer mobilen Verbrennungskraftmaschine besteht. Weiter sollen für diesen Einsatzzweck geeignete Vliese angegeben werden.

Diese Aufgaben werden gelöst mit einem Verfahren zur Herstellung eines Vlieses mit den Merkmalen gemäß Patentanspruch 1, einer Vorrichtung zum Verschweißen von metallischen Fasern mit den Merkmalen des Patentanspruchs 5, sowie einem Wabinkörper mit den Merkmalen gemäß Anspruch 14, Weitere vorteilhafte Ausgestaltungen der Erfindung sind in den jeweils abhängig formulierten Patentansprüchen beschrieben. Dabei sind die in den Patentansprüchen einzeln aufgeführten Merkmale in beliebiger, technologisch sinnvoller, Weise miteinander kombinierbar, so dass hiermit weitere Ausgestaltungen der Erfindung angegeben werden.

Das erfindungsgemäße Verfahren zur Herstellung eines Vlieses aus metallischen Fasern umfasst zumindest die Schritte:
a) Bilden einer Lage mit metallischen Fasern und
b) Verschweißen der Fasern miteinander zu einem Vlies,
wobei Schritt b) eine mehrmalige Durchführung eines Schweißprozesses bezüglich eines Abschnitts des Vlieses umfasst so dass dieser Abschnitt weiter komprimiert wird und zusätzliche Schweißverbindungen ausgebildet werden.

Mit einem "Vlies" ist insbesondere ein flächiges Gebilde gemeint, wobei die das Vlies bildenden Fasern geordnet oder wirr zueinander angeordnet sein können. Beispiele für ein Vlies sind Gewebe, Gitterstrukturen, Gestricke, Wirrlagen, etc.. Das Vlies kann grundsätzlich auch mindestens einen Zusatzstoff umfassen, wie z.B. andersartige Vliese, Pulver oder dergleichen, wobei dieser letztendlich mit dem Vlies unverlierbar verbunden ist. Das Vlies wird mit Fasern gebildet, die aus einem hochtemperaturfesten und korrosionsbeständigen Material sind. Die "Faser" stellt insbesondere eine Bezeichnung für ein lang gestrecktes Element dar und umfasst insbesondere auch drahtförmige, spanförmige und ähnliche Elemente. Die metallischen Fasern können im Wesentlichen rund, oval oder vieleckig ausgeführt sein. Besonders bevorzugt sind Fasern mit einem flachen Querschnitt. Die metallischen Fasern umfassen insbesondere ein Material, dass im Wesentlichen Stahl als Grundwerkstoff umfasst, wobei bevorzugt hohe Anteile von Chrom (z.B. in einem Bereich von 18 bis 21 Ges.%) und/oder Aluminium (z.B. mindestens 4,5 Gew.%, insbesondere mindestens 5,5 Gen.%) vorgesehen sind. Grundsätzlich sind auch aluminierte Fasern einsetzbar. Diese metallischen Fasern sind bevorzugt mit einer Faserlänge im Bereich von 0,1 bis 50 mm (insbesondere in einem Bereich von 1 bis 10 mm) und einem Faserdurchmesser im Bereich von 0,01 bis 0,1 mm (insbesondere in einem Bereich von 0,02 bis 0,05 mm) ausgeführt. Die Porosität des herzustellenden Vlies liegt bevorzugt in einem Bereich von 30% bis 80%, insbesondere in einem Bereich von 45% bis 60%.

Das Ausbilden einer Lage gemäß Schritt a) umfasst beispielsweise das Berieseln einer Unterlage mit Fasern, so dass diese zumindest teilweise aufeinander liegend angeordnet werden. Hat die Lage die gewünschte Dicke bzw. das gewünschte Flächengewicht (z.B. im Bereich von 250 bis 1.500 g/m²), so wird dieser lockere Verbund der metallischen Fasern nun einem Schweißprozess zugeführt.

Wie aus Schritt b) zu entnehmen, erfolgt das Verschweißen der Fasern miteinander durch eine mehrmalige Durchführung eines Schweißprozesses bezüglich eines Abschnitts des Vlieses bzw. der Lage. Mit einem Abschnitt ist insbesondere ein Teilbereich des Vlieses bzw. der Lage in Transportrichtung gemeint. Regelmäßig wirkt ein Schweißprozess auf einen solchen Abschnitt ein, wobei innerhalb dieses Abschnitts im Wesentlichen zeitgleich mehrere Schweißverbindungen zwischen verschiedenen Fasern erzeugt werden.

Hier wird nun vorgeschlagen, dass ein solcher Abschnitt mehrmals einem Schweißprozess unterzogen wird, wobei jeweils verschiedene Schweißverbindungen generiert werden. So wird mit einem ersten Schweißprozess in dem Abschnitt eine bestimmte Anzahl von Schweißverbindungen erzeugt, dieser Abschnitt zu einem weiteren Schweißprozess zugeführt und während dieses zweiten Schweißprozesses werden weitere Schweißverbindungen generiert. Vorzugsweise wird der Schweißprozess zweimal durchgeführt.

Hinsichtlich des Schweißprozesses werden bevorzugt Widerstandsschweißprozesse eingesetzt. Dabei können die mehreren Schweißprozesse mit unterschiedlichen Schweißmethoden durchgeführt werden, bevorzugt ist jedoch die Durchführung zweier Schweißprozesse der gleichen Schweißmethode, da auf dieses Weise der technische Aufwand hinsichtlich der Schweißanlagen reduziert werden kann. Vorteilhafterweise erfolgt die Durchführung der Schweißprozesse geregelt, dass heißt es sind Mittel vorgesehen, die gewährleisten, dass gerade beim Einsatz von Wiederstandsschweißverfahren ein Stromfluss bei einem nachgelagerten Schweißprozess nicht nur durch die bereits erzeugten Schweißverbindungen fließt, sondern zusätzliche Schweißverbindungen in anderen Teilbereichen des Abschnitts erzeugt werden. Dabei werden die Schweißprozesse bezüglich eines sich fortbewegenden Abschnitts des Vlieses bzw. der Lage örtlich getrennt durchgeführt.

In diesem Zusammenhang ist es besonders vorteilhaft, dass Schritt b) durch Rollnahtschweißen durchgeführt wird. Beim Rollnahtschweißen wird die Lage bzw. das Vlies durch ein Rollen- bzw. Walzenpaar hindurchgeführt, bezüglich dessen eine Spannung angelegt ist. Daraus resultiert ein Stromfluss durch die metallischen Fasern, worauf aufgrund des elektrischen Widerstands in den Fasern Wärme erzeugt wird. Diese Wärme verursacht in den Kontaktbereichen der metallischen Fasern ein Aufschmelzen des Fasermaterials, wobei stoffschlüssige Verbindungen hin zu benachbarten Fasern erzeugt werden. Bei der Durchführung des Rollnahtschweißens können Ströme intermittierend (z.B. mit einer vorgegebenen Impulsdauer und einer vorgegebenen Pausendauer) oder als Konstantstrom anliegen. Um einen ausreichenden Kontakt der Rollen bzw. Walzen hin zur Lage bzw. dem Vlies zu gewährleisten, wird das Vlies bzw. die Lage mit den Rollen gepresst, insbesondere liegt dabei ein Anpressdruck im Bereich von 500 bis 1500 N/cm² an.

Üblicherweise wird jedoch nicht über den gesamten Kontaktbereich der Rollen bzw. Walzen ein Stromfluss verwirklicht, da dieser zumeist den Übergang hin zur gegenüberliegenden Walze mit dem geringsten elektrischen Widerstand wählt. Aus diesem Grund wird in einem solchen Abschnitt des Vlieses während eines einzigen Schweißprozesses nur eine mehrfache, punktuelle Verschweißung der Fasern generiert. Bei einer bevorzugten Durchführung des Schrittes b) sind beide Schweißprozesse als Rollnahtschweißen ausgeführt, wobei beim zweiten Rollnahtschweißen Schweißverbindungen in den Bereichen zwischen den ersten Schweißverbindungen eines Abschnittes erzeugt werden.

Gemäß einer Weiterbildung des Verfahrens werden während Schritt b) mehrere Schweißnähte gebildet, die einander kreuzen. So können beispielsweise während eines ersten Schweißprozesses im Wesentlichen parallel zur Transportrichtung verlaufende Schweißnähte erzeugt werden, wobei die Schweißnähte die Zonen des Vlieses beschreiben, in denen eine konzentrierte Ansammlung von Schweißverbindungen vorliegen. In einem nachfolgenden Schweißprozess werden hierzu schräg bzw. quer dazu verlaufende Schweißnähte erzeugt. Damit bilden die Schweißnähte vorteilhafterweise eine Art Muster.

Weiter wird auch vorgeschlagen, dass während Schritt b) ein Schutzgas hin zum Abschnitt des Vlieses geführt wird. Als Schutzgas kommt beispielsweise ein Argon und/oder Helium umfassendes Gas in Betracht. Damit kann verhindert werden, dass das Material der metallischen Fasern oxidiert und somit beispielsweise nachgelagerte Widerstandsschweißverfahren bei der Ausbildung von stoffschlüssigen Verbindungen behindert werden.

Gemäß einem weiteren Aspekt der Erfindung wird eine Vorrichtung zum Verschweißen von metallischen Fasern vorgeschlagen, welche wenigstens folgende Komponenten umfasst:
- Eine Zufuhreinrichtung für eine Lage aus metallischen Fasern, eine erste Schweißstation, wobei ein Abschnitt der Lage komprimiert wird und in diesem Abschnitt der Lage Verbindungen zwischen den Fasern erzeugt werden können, und
- eine zweite Schweißstation, der der teilweise verfestigte und verschweißte Abschnitt der Lage zugeführt werden kann und die weitere Verbindungen zwischen den Fasern erzeugen und eine weitere Komprimierung bewirken kann, wobei mehrere Schweißnähte durch die erste Schweißstation und die zweite Schweißstation gebildet werden, die einander Kreuzen.

Diese Vorrichtung ist insbesondere zur Durchführung des erfindungsgemäß beschriebenen Verfahrens zur Herstellung eines Vlieses aus metallischen Fasern geeignet.

Die Zufuhreinrichtung ist bevorzugt so gestaltet, dass diese eine kontinuierliche Zufuhr, insbesondere mit einer Transportgeschwindigkeit im Bereich von 1 m/s bis 10 m/s, hin zu den Schweißstationen ermöglicht. Die Zufuhreinrichtung kann beispielsweise als Fördereinheit ausgeführt sein. Zur Fixierung der metallischen Fasern bis zum Erreichen der ersten und/oder zweiten Schweißstation kann die Zufuhreinrichtung mit Haltemitteln ausgeführt sein, wie beispielsweise Führungen, Magneten, etc.. Bevorzugt kann die Zufuhreinrichtung die Transportgeschwindigkeit der Lage variieren. Weiter ist auch vorteilhaft, dass Mittel zur Bestimmung des Gewichts eines Abschnitts der Lage mit der Zufuhreinrichtung kombiniert sind.

Mittels dieser Zufuhreinrichtung erfolgt nun der Transport der Lage hin zur ersten Schweißstation. Die Lage mit den losen metallischen Fasern wird mittels der ersten Schweißstation vorfixiert, wobei eine bestimmte Anzahl von Schweißverbindungen erzeugt werden. Dieser Abschnitt wird nun, insbesondere durch die Zufuhreinrichtung, weiter zur zweiten Schweißstation transportiert, die von der ersten Schweißstation in Transportrichtung entfernt angeordnet ist. Hier nun werden weitere Schweißverbindungen bezüglich des bereits einmalig verschweißten Abschnitts der Lage gebildet. Grundsätzlich können die erste Schweißstation und die zweite Schweißstation in einer Anlage kombiniert sein, es ist aber auch möglich, dass die Schweißstationen als separate Anlagen ausgeführt sind.

In diesem Zusammenhang ist es besonders bevorzugt, dass die erste Schweißstation und die zweite Schweißstation zur Durchführung des Rollnahtschweißens geeignet sind. Dies bedeutet insbesondere, dass Mittel zur Bereitstellung eines Schweißstroms mit der erforderlichen Stromstärke bzw. zur Bereitstellung der Stromimpulse mit vorgegebener (ggf. variabler) Frequenz vorgesehen sind. Weiter können Mittel zur Bereitstellung eines intermittierenden oder konstanten Stromflusses vorgesehen sein. Es ist auch möglich, dass Mittel zur Bereitstellung von Schutzgas, Mittel zur Überprüfung der Schweißverbindungen und/oder anderer Vlieseigenschaften sowie eine entsprechende Schweißsteuerung vorgesehen sein.

In diesem Zusammenhang ist es vorteilhaft, dass wenigstens eine der ersten Schweißstation und zweiten Schweißstation mindestens zwei Rollelektroden aufweist, durch welche die Lage mit Fasern hindurchgeführt werden kann und welche einen Stromfluss durch die Fasern verwirklichen kann, wobei mindestens eine Rollelektrode Mittel zur Variierung der Schweißposition aufweist. Bevorzugt ist, dass beide Schweißstationen mit solchen Mitteln zu Variierung der Schweißpositionen bezüglich des Abschnitts des Vlieses und/oder bezüglich der Schweißposition der anderen Schweißstation ausgeführt sind. Die Mittel zur Variierung der Schweißposition ermöglichen beispielsweise, dass nicht die gesamte Umfangsfläche der Rollelektrode mit den Fasern im Bereich des Abschnittes in Kontakt gebracht wird, sondern vielmehr nur einzelne Zonen elektrisch leitend mit der Lage bzw. dem Vlies kontaktiert werden. Im Hinblick auf die Ausgestaltung solcher Mittel wird insbesondere auf die nachfolgenden Erläuterungen zu weiteren vorteilhaften Ausgestaltungen verwiesen sowie auf die Figurenbeschreibung. Dabei ist klar, dass ein Fachmann weitere, gegebenenfalls implizite benannte, Mittel kennt, die eine gleichwirkende Variierung der Schweißposition zur Folge haben. Solche üblichen Abwandlungen können ebenfalls Vorteile im Hinblick auf die anwendungsspezifische Ausgestaltung eines Vlieses haben.

Hier wird nun auch vorgeschlagen, dass wenigstens eine Rollelektrode mit mehreren Sektionen ausgeführt ist, die unabhängig voneinander einen Stromfluss durch die von ihnen kontaktieren Fasern erzeugen können. Das bedeutet mit anderen Worten, dass beispielsweise eine Schweißstation mit einer Rollelektrode über die gesamte Breite eines Abschnitts des Vlieses quer zur Transportrichtung ausgeführt ist, jedoch mehrere Segmente aufweist, die sich nur über einen Teil dieser Breite erstrecken. Zur Veranschaulichung können beispielsweise drei oder vier walzenartige Rollelektroden nebeneinander angeordnet sein, die jeweils einen separaten Stromkreislauf aufweisen. Beim Hindurchführen der Lage bzw. des Vlieses werden somit in Transportrichtung verlaufende Schweißnähte bzw. Bahnen mit Schweißverbindungen erzeugt, wobei die hinsichtlich der Häufigkeit, der Orientierung, der Größe etc. jeweils unterschiedlich ausgeführt werden können. Damit werden in einem Abschnitt und an einer Schweißstation gleichzeitig mehrere Schweißnähte unabhängig voneinander erzeugt. Das hat beispielsweise den Vorteil, dass auf unterschiedliche Verteilungen der Fasern innerhalb der Lage reagiert werden kann oder die technischen Anforderungen an die Schweißstation in der Weise reduziert werden können, da geringere Anpressdrücke bzw. geringere Ströme über die Rollelektroden bzw. deren separate Zone bereit gestellt werden müssen.

Es sind jedoch gerade zur Vereinfachung der Stromzuführung hin zu den Segmenten der Rollelektrode, zur Vermeidung von Platzproblemen und dergleichen ggf. auch vorteilhaft, dass die mehreren Sektionen der wenigstens einen Rollelektrode in Transportrichtung der Lage versetzt zueinander angeordnet sind. Eine solche versetzte Anordnung der Segmente ist z.B. dann bevorzugt, wenn mehr als 2 Segmente vorliegen, insbesondere mehr als 5.

Gemäß einer vorteilhaften Weiterbildung der Vorrichtung ist wenigstens eine Rollelektrode mit einem Profil ausgeführt. Das bedeutet mit anderen Worten, dass die Rollelektrode nicht mit einer glatten, im Wesentlichen zylindrischen Umfangsfläche ausgebildet ist, sondern vielmehr Erhebungen und Vertiefungen auf der Umfangsfläche vorgesehen sind. Die Erhebungen bzw. Vertiefungen können als Noppen, Linien, Mikroflächen und/oder als komplexes Muster ausgebildet sein. Damit wird erreicht, dass die Umfangsfläche mit unterschiedlichen Abständen hin zur Lage bzw. dem Vlies ausgebildet ist, wobei die Vorsprünge einen besseren elektrischen Kontakt zu den metallischen Fasern bereitstellen und damit als bevorzugte Region zur Ausbildung von Schweißverbindungen anzusehen sind. Die Profilierung der Rollelektrode führt also dazu, dass innerhalb eines Abschnitts des Vlieses Regionen mit großer Schweißwahrscheinlichkeit erzeugt werden, die kleiner als die Gesamtbreite der Rollelektrode sind. Damit wird beispielsweise die Möglichkeit eröffnet, mit einem nachgelagerten Schweißprozess und unter Einsatz ähnlich profilierter Rollelektroden die bevorzugten Regionen für Schweißverbindungen zueinander zu versetzen, so dass letztendlich über den gesamten Abschnitt eine relativ gleichmäßige Verschweißung der Faser realisierbar ist. Damit wird dem Phänomen entgegengewirkt, dass bei einem nachgelagerten Rollnahtschweißprozess der Stromfluss bevorzugt durch die Regionen des Vlieses hindurchfließt, bezüglich derer bereits Schweißverbindungen ausgeführt sind.

Weiter wird auch vorgeschlagen, dass wenigstens eine Schweißstation mit Mitteln zur Veränderung der Position einer Rotationsachse wenigstens einer Rollelektrode ausgeführt ist. Damit ist insbesondere gemeint, dass die Position der Rotationsachse verschoben und/oder geneigt werden kann. Bevorzugt erfolgt eine Veränderung eines Winkels der Rotationsachse bezüglich einer durch das hindurch geführte Vlies gebildeten Fläche. Damit wird ebenfalls nur ein bestimmter Teilbereich der Rollelektrode mit dem Faservlies in Kontakt gebracht, wobei beispielsweise ein Taumeln der Rollelektrode ein im Abschnitt des Vlieses hin- und herlaufenden Schweißprozess zur Folge haben kann. Gegebenenfalls ist hier auch eine Anpassung der Umfangsfläche der Rollelektrode erforderlich, insbesondere ist diese ballig ausgeführt.

Nun wird weiter vorgeschlagen, dass Mittel zur Veränderung der Schweißstationen zueinander vorgesehen sind. Insbesondere ermöglichen die Mittel eine Veränderung der Entfernung der Schweißstationen zueinander. Damit ist möglich, dass beispielsweise die Rollelektroden mit einem bestimmten Profil ausgeführt sind und synchron betrieben werden, wobei jedoch eine Überlagerung der erzeugten Schweißverbindungen aufgrund einer angepassten Variierung der Entfernung der Positionen der Schweißstationen zueinander vermieden wird. Die Mittel zur Veränderung der Position der Schweißstationen können auch mindestens einen Sensor, Antrieb und/oder mindestens eine Verstelleinheit umfassen.

Gemäß noch einer weiteren Ausgestaltung der Vorrichtung ist wenigstens eine Schweißstation mit Mitteln zur Bereitstellung eines Schutzgases im Bereich der Schweißposition ausgeführt. Diese umfassen insbesondere einen Vorratsbehälter, eine Zuleitung und eine Ausströmeinheit für ein Argon und/oder Helium umfassendes Schutzgas. Im Hinblick auf den Einsatz eines Vlieses zur Behandlung eines Abgasstroms ist es vorteilhaft, ein Vlies umfassend metallischen Fasern aus einem hochtemperaturfesten und korrosionsbeständigen Material einzusetzen, dass mit dem erfindungsgemäßen Verfahren oder mit der erfindungsgemäßen Vorrichtung hergestellt ist. Deshalb wird auch die Verwendung eines solchen Vlieses zum Filtern eines Abgasstromes vorgeschlagen.

Die Erfindung sowie das technische Umfeld werden anhand der Figuren näher erläutert. Die Figuren zeigen auch besonders bevorzugte Ausführungsbeispiele der Erfindung, auf die diese jedoch nicht begrenzt ist. Die Figuren sind regelmäßig schematische Darstellung und können deshalb insbesondere nicht zur Veranschaulichung von Größenverhältnissen herangezogen werden. Es zeigen:
- Fig. 1:: ein Ausführungsbeispiel für eine Vorrichtung zum Verschweißen von metallischen Fasern,
- Fig. 2:: eine Ausführungsvariante einer Schweißstation mit Mitteln zur Verände- rung der Position der Rotationsachse einer Rollelektrode,
- Fig. 3:: eine weitere Ausführungsvariante einer Schweißstation mit einer profi- lierten und in Sektionen unterteilten Rollelektrode,
- Fig. 4:: ein Detail einer Abgasbehandlungseinheit mit einem Vlies aus metalli- schen Fasern,
- Fig. 5:: ein Ausführungsbeispiel gemäß der Erfindung für ein Vlies aus metallischen Fasern,
- Fig. 6:: ein Detail des Vlieses aus Fig. 5, und
- Fig. 7:: ein weiteres Ausführungsbeispiel für eine Vorrichtung zum Verschwei- ßen mit versetzten Rollelektroden.

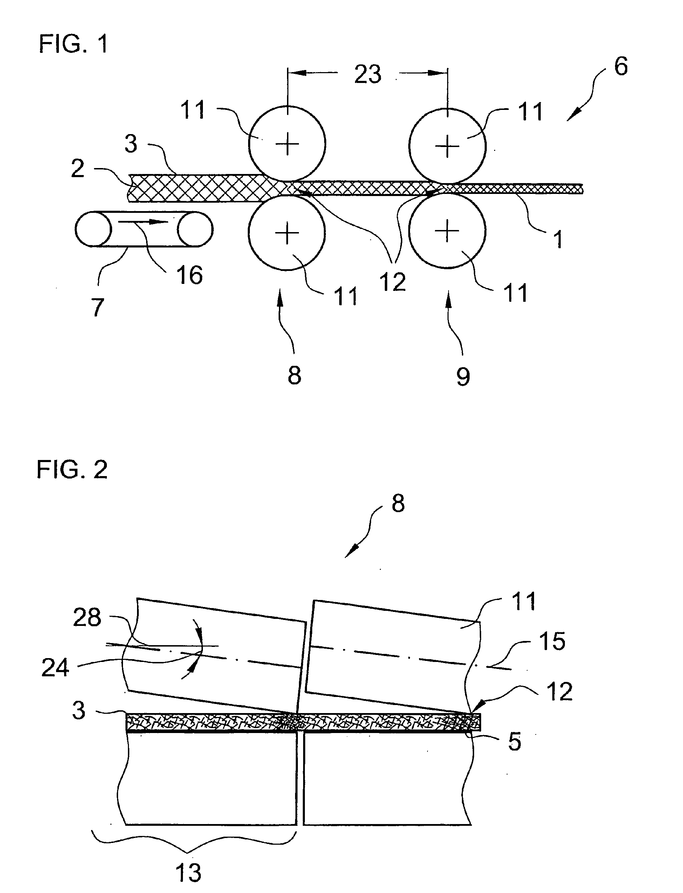

Fig. 1 zeigt schematisch eine Vorrichtung 6 zum Verschweißen von metallischen Fasern 2 zur Herstellung eines Vlieses 1. Dabei sind die Fasern 2 zunächst in einem lockeren Verbund zu einer Lage 3 angeordnet, die mittels einer Zufuhreinrichtung 7 in eine Transportrichtung 16 hin zu den Schweißstationen 8 und 9 zugeführt wird. Die Zuführeinrichtung 7 ist dabei schematisch als Förderband dargestellt.

Die Lage 3 wird nun zunächst durch zwei Rollelektroden 11 hindurch geführt, wobei bezüglich einer ersten Schweißposition 12 eine Mehrzahl von Schweißverbindungen erzeugt wird. Beim hindurchführen der Lage 3 durch die Rollelektroden 11 wird die Lage 3 komprimiert, wobei gleichzeitig in bestimmten Regionen ein Stromfluss durch die Lage 3 generiert wird. Dieses teilverfestigte und teilverschweißte Vlies 1 wird nun zu einer zweiten Schweißstation 9 zugeführt, welche in einer vorgegebenen Entfernung 23 positioniert ist. Auch bei diesem Rollnahtschweißen im Bereich der zweiten Schweißstation 9 erfolgt eine weitere Komprimierung des Vlieses 1 und eine zusätzliche Ausbildung von Schweißverbindungen. Das die zweite Schweißstation 9 verlassende Vlies 1 hat nun hinsichtlich seines Aufbaus eine Festigkeit, die einen Einsatz für Abgasbehandlungseinrichtungen mobiler Verbrennungskraftmaschinen dauerhaft gewährleistet. Gemäß der Erfindung, mit der hier dargestellten Variante einer Vorrichtung 6 lässt sich ein Verschweißen der Fasern 2 miteinander zu einem Vlies 1 bewerkstelligen, wobei eine mehrmalige Durchführung eines Schweißprozesses bezüglich eines Abschnitts 4 des Vlieses 1 umfasst ist.

Fig. 2 veranschaulicht nun eine Ausführungsvariante der ersten Schweißstation 8 mit taumelnden Rollelektroden 11. Grundsätzlich kann auch die zweite Schweißstation 9 in ähnlicher Weise ausgeführt sein. Bei der dargestellten Ausführungsvariante sind nur die bezüglich der Lage 3 oben angeordneten Rollelektroden 11 taumelnd ausgeführt. Gleichwohl können jedoch auch die unteren Rollelektroden 11 taumelnd ausgeführt sein. Das Taumeln, welches kontinuierlich oder intermittierend stattfinden kann, umfasst insbesondere eine Variation der Rotationsachsen 15 um einen bestimmten Winkel 24 bezüglich der Horizontalen 28. Auf diese Weise wird die Schweißposition 12 zur Ausbildung einer Schweißnaht 5 bzw. von Verbindungen 10 ermöglicht, die beispielsweise über eine Sektion 13 und/oder quer zur Transportrichtung 16 (nicht dargestellt) variiert. In dem gezeigten Ausführungsbeispiel taumeln die beiden dargestellten Sektionen 13 der Rollelektrode 11 synchron, dies ist jedoch nicht zwingend erforderlich.

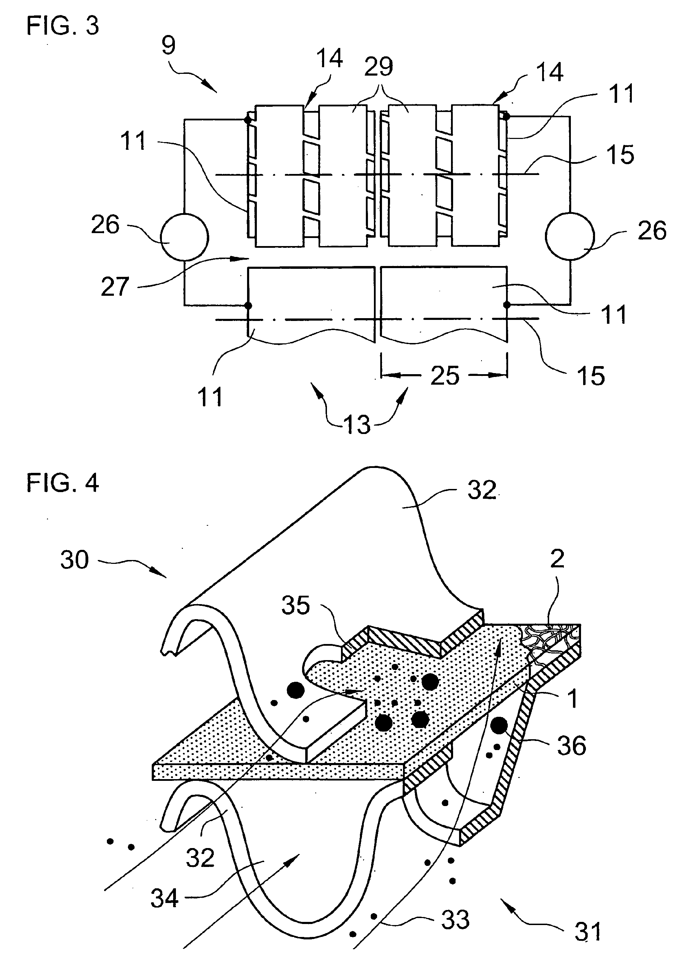

Fig. 3 zeigt ein weiteres Ausfiihrungsbeispiel einer (segmentierten) Rollelektrode 11 einer zweiten Schweißstation 9. Die Sektionen 13 der Rollelektrode 11 sind jeweils mit einer Umfangsfläche 29 ausgeführt, die mit einem (hier unterschiedlich ausgeprägten) Profil 14 ausgeführt sind, wobei die Sektionen 13 die gleiche Rotationsachse 15 aufweisen. Jede Sektion 13 der Rollelektrode 11 ist so ausgeführt, dass diese unabhängig voneinander einen Stromfluss durch die von ihnen kontaktierten Fasern 2 (nicht dargestellt) erzeugen können. Hierfür weisen diese jeweils eine separate Stromversorgung 26 auf, die jeweils mit dem gegenüberliegenden Paar der Sektionen 13 der Rollelektrode 11 kontaktiert sind. Zur Ausbildung von Schweißverbindungen wird die Lage 3 bzw. das Vlies 1 (nicht dargestellt) durch den Spalt 27 zwischen den Rollelektroden 11 durchgeführt. Bevorzugt sind die Rollelektroden 11 bzw. die Sektionen 13 mit einer Breite 24 ausgeführt, die höchstens 100 mm beträgt.

Fig. 4 zeigt ein Detail einer Abgasbehandlungseinheit 30 umfassend einen Wabenkörper 31, der mit mehreren strukturierten Metallfolien 32 und mehreren Vliesen 1 so aufgebaut ist, dass für ein Abgas in einer Strömungsrichtung 33 durchströmbare Kanäle 34 gebildet sind. Strömungsbeeinflusser 35 bewirken eine Ablenkung des Abgasstromes hin zum Vlies 1, so dass mitgeführte Partikel 36 dort angelagert werden. Das Detail der Abgasbehandlungseinheit 30 stellt insbesondere ein Detail einer Partikelfalle bzw. eines Filters dar, wobei diese Abgasbehandlungseinheit 30 bevorzugt im Abgassystem eines (einen Otto- oder Dieselmotor aufweisenden) Fahrzeuges integriert ist.

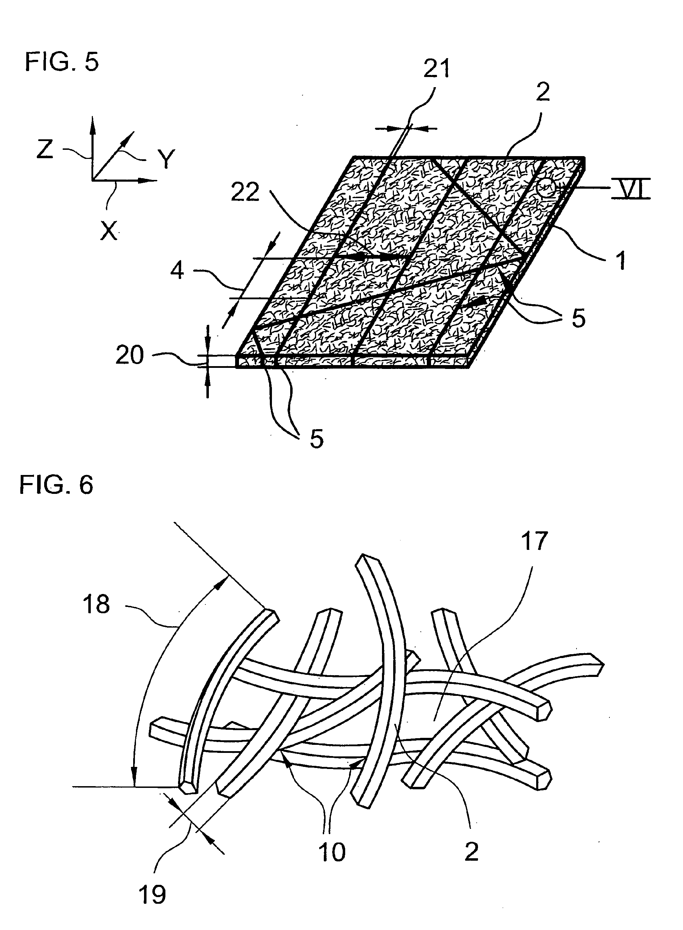

Fig. 5 veranschaulicht ein erfindungsgemäßes Vlies 1, das mehreren Schweißprozesse bezüglich eines Abschnitts 4 unterzogen wurde. Der Abschnitt 4 erstreckt sich dabei in Richtung Y, die bevorzugt der Transportrichtung 16 entspricht. Die Vliesbreite wird bevorzugt in Richtung X angegeben, die Vliesdicke 20 in Richtung Z. Infolge der mehrmaligen Durchführung eines Rollnahtschweißverfahrens sind mehrere Schweißnähte 5 gebildet, die sich gemäß der Erfindung kreuzen. Die Schweißnähte 5 können mit einer gewünschten Ausdehnung 21 und mit einem gewünschten Abstand 22 zueinander angeordnet sein. An dieser Stelle sei explizit darauf hingewiesen, dass die Ausdehnung 21 und der Abstand 22 lediglich schematisch dargestellt sind und es bevorzugt auch möglich ist, dass die Ausdehnung 21 größer als der Abstand 22 ist. Eine der Schweißnähte 5 weist eine Zick-Zack-Form auf, was beispielsweise durch taumelnde Rollelektroden erreicht werden kann. Die parallel bzw. senkrecht zueinander verlaufenden Schweißnähte 5 können beispielsweise mit einer profilierten Rollelektrode 11 generiert werden.

Fig. 6 veranschaulicht nun ein Detail des Vlieses 1 aus Fig. 5, wobei die Fasern 2 vergrößert dargestellt sind. Die wirr zueinander angeordneten metallischen Fasern 2 haben in Folge der mehrfachen Durchführung des Schweißprozesses Verbindungen 10 miteinander im Bereich des Kontaktes zueinander gebildet. Die Fasern 2 sind hier mit einem vieleckigen Querschnitt ausgebildet, wobei die Fasern 2 mit einer Faserlänge 18 und einem Faserdurchmesser 19 beschreibbar sind. Durch Variationen bei der Ausbildung der Lage mit metallischen Fasern als lockerer Verbund sowie den während der Schweißprozesse einwirkenden Kräften auf das Vlies 1 bzw. die Lage 3 können unterschiedlich viele und unterschiedlich große Poren 17 mit den Fasern 2 gebildet werden, wobei eine gewünschte Porosität (z.B. im Bereich von 45 bis 70%) des Vlieses 1 einstellbar ist.

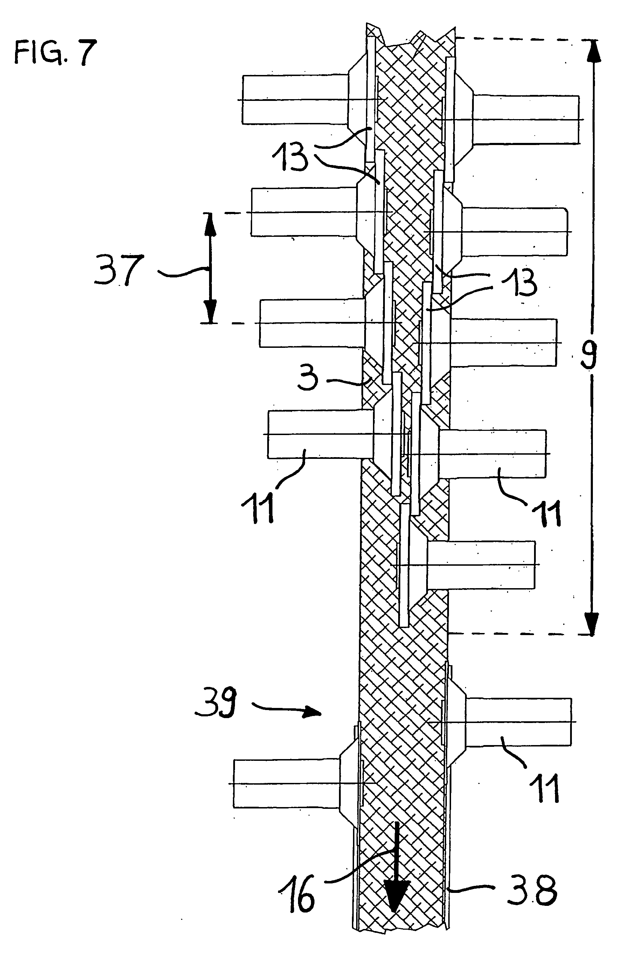

Fig. 7 veranschaulicht einen Teil eines weiteren Ausführungsbeispiels für eine dreistufige Schweiß-Vorrichtung. Dargestellt ist hier die zweite Schweißstation 9, die mit einer Mehrzahl von Rollelektroden 11 ausgeführt ist, die mehreren Sektionen 13 bilden, die in Transportrichtung 16 der Lage 3 mit einem Versatz 37 zueinander angeordnet sind. Diese Variante erlaubt eine gleichmäßigere Einleitung des Schweißstromes in die Lage 3, wobei die Sektionen 13 zusammen wieder die gesamte Breite der Lage 3 überdecken. Die (hier nicht dargestellte) erste Schweißposition kann hiervon unabhängig nach einer der beschriebenen Ausfiihrungsvarianten ausgeführt sein. Der zweiten Schweißposition 9 folgt noch eine Apparatur 39 zur Behandlung des Randes 38 der Lage 3, wobei beispielsweise eine Metallfolie nach Art eines Saumes befestigt wird, um einen gasundurchlässigen Rand 38 zu bilden, der ggf. als Befestigungsbereich zum Fügen mehrerer Vliese miteinander dienen kann. Dafür kann die Apparatur 39 ebenfalls mit einer Anzahl von Rollelektroden 11 ausgeführt sein.

### Bezugszeichenliste

- 1: Vlies
- 2: Faser
- 3: Lage
- 4: Abschnitt
- 5: Schweißnaht
- 6: Vorrichtung
- 7: Zufuhreinrichtung
- 8: erste Schweißstation
- 9: zweite Schweißstation
- 10: Verbindung
- 11: Rollelektrode
- 12: Schweißposition
- 13: Sektion
- 14: Profil
- 15: Rotationsachse
- 16: Transportrichtung
- 17: Pore
- 18: Faserlänge
- 19: Faserdurchmesser
- 20: Vliesdicke
- 21: Ausdehnung
- 22: Abstand
- 23: Entfernung
- 24: Winkel
- 25: Breite
- 26: Stromversorgung
- 27: Spalt
- 28: Horizontale
- 29: Umfangsfläche
- 30: Abgasbehandlungseinheit
- 31: Wabenkörper
- 32: Metallfolie
- 33: Strömungsrichtung
- 34: Kanal
- 35: Strömungsbeeinflusser
- 36: Partikel
- 37: Versatz
- 38: Rand
- 39: Apparatur

## Patentansprüche

1. Verfahren zur Herstellung eines Vlieses (1) aus metallischen Fasern (2) umfassend zumindest die Schritte:
a) Bilden einer Lage (3) mit metallischen Fasern (2) und
b) Verschweißen der Fasern (2) miteinander zu einem Vlies (1),
**dadurch gekennzeichnet, dass** Schritt b) eine mehrmalige Durchführung eines Schweißprozesses bezüglich eines Abschnitts (4) des Vlieses (1) umfasst, so dass dieser Abschnitt (4) weiter komprimiert wird und zusätzliche Schweißverbindungen ausgebildet werden.

2. Verfahren nach Anspruch 1, bei dem Schritt b) durch Rollnahtschweißen durchgeführt wird.

3. Verfahren nach Anspruch 1 oder 2, bei dem während Schritt b) mehrere Schweißnähte (5) gebildet werden, die einander kreuzen.

4. Verfahren nach einem der vorhergehenden Ansprüche, bei dem während Schritt b) ein Schutzgas hin zum Abschnitt (4) des Vlies (1) geführt wird.

5. Vorrichtung (6) zum Verschweißen von metallischen Fasern (2) umfassend wenigstens folgende Komponenten:
- eine Zufuhreinrichtung (7) für eine Lage (3) aus metallischen Fasern (2),
- eine erste Schweißstation (8), wobei ein Abschnitt (4) der Lage (3) komprimiert wird und in diesem Abschnitt (4) der Lage (3) Verbindungen (10) zwischen den Fasern (2) erzeugt werden können, **dadurch gekennzeichnet, dass**
- eine zweite Schweißstation (9) vorgesehen ist und der zweiten Schweißstation (9) der teilweise verfestigte und verschweißte Abschnitt (4) der Lage (3) zugeführt werden kann und weitere Verbindungen (10) zwischen den Fasern (2) erzeugt und eine weitere Komprimierung bewirkt werden kann, wobei die Vorrichtung (6) so ausgebildet ist, daß mehrere Schweißnähte (5) durch die erste Schweißstation (8) und die zweite Schweißstation (9) gebildet werden, die einander kreuzen.

6. Vorrichtung (6) nach Anspruch 5, wobei die erste Schweißstation (8) und die zweite Schweißstation (9) zur Durchführung des Rollnahtschweißens geeignet ist.

7. Vorrichtung (6) nach Anspruch 6, wobei wenigstens eine der ersten Schweißstation (8) und zweiten Schweißstation (9) mindestens zwei Rollelektroden (11) aufweist, durch welche die Lage (3) mit Fasern (2) hindurch geführt werden kann und welche einen Stromfluss durch die Fasern (2) verwirklichen können, wobei mindestens eine Rollelektrode (9) Mittel zur Variierung der Schweißposition (12) aufweist.

8. Vorrichtung (6) nach Anspruch 6 oder 7, wobei wenigstens eine Rollelektrode (11) mit mehreren Sektionen (13) ausgeführt ist, die unabhängig voneinander einen Stromfluss durch die von ihnen kontaktierten Fasern (2) erzeugen können.

9. Vorrichtung (6) nach Anspruch 8, wobei die mehreren Sektionen (13) der wenigstens einen Rollelektrode (11) in Transportrichtung (16) der Lage (3) versetzt zueinander angeordnet sind.

10. Vorrichtung (6) nach einem der Ansprüche 6 bis 9, wobei wenigstens eine Rollelektrode (11) mit einem Profil (14) ausgeführt ist.

11. Vorrichtung (6) nach einem der Ansprüche 6 bis 10, wobei wenigstens eine Schweißstation (8, 9) mit Mitteln zur Veränderung der Position einer Rotationsachse (15) wenigstens einer Rollelektrode (11) ausgeführt ist.

12. Vorrichtung (6) nach einem der Ansprüche 6 bis 11, wobei Mittel zur Veränderung der Position der Schweißstationen (8, 9) zueinander vorgesehen sind.

13. Vorrichtung (6) nach einem der Ansprüche 6 bis 12, wobei wenigstens eine Schweißstation (8, 9) mit Mitteln zur Bereitstellung eines Schutzgases im Bereich der Schweißposition (12) ausgeführt ist.

14. Wabenkörper (31), aufweisend mehrere strukturierte Metallfolien (32) und mehrere Vliese (1), der so aufgebaut ist, dass für ein Abgas in einer Strömungsrichtung (33) durchströmbare Kanäle (34) gebildet sind, wobei die Vliese (1) metallische Fasern (2) aus einem hochtemperaturfesten und korrosionsbeständigen Material umfassen, **dadurch gekennzeichnet, dass** das Vlies (1) in einem Abschnitt (4) mehrfach komprimiert ist und Schweißverbindungen aufweist, hergestellt mit einem Verfahren nach einem der Ansprüche 1 bis 5 oder mit einer Vorrichtung (6) nach einem der Ansprüche 6 bis 13, wobei mehrere Schweißnähte (5) gebildet sind, die einander kreuzen.

15. Verwendung eines Wabenkörpers (31) nach Anspruch 14 zum Filtern eines Abgasstromes.

## Claims

1. Method for producing a fleece (1) from metallic fibers (2), the method comprising at least the following steps:
a) forming a layer (3) with metallic fibers (2); and
b) welding the fibers (2) to one another to form a fleece (1), **characterized in that** step b) comprises repeatedly carrying out a welding process relative to a portion (4) of the fleece (1) in such a way, that said portion (4) is further compressed and additional welded connections are formed.

2. Method according to claim 1, in which step b) is carried out by roller seam welding.

3. Method according to claim 1 or 2, in which during step b) a plurality of weld seams (5) crossing one another are formed.

4. Method according to one of preceding claims, in which during step b) an inert gas is conducted to the portion (4) of the fleece (1).

5. Device (6) for welding metallic fibers (2), the device comprising at least the following components:
- a feeding unit (7) for feeding a layer (3) of metallic fibers (2);
- a first welding station (8), wherein a portion (4) of the layer (3) is compressed and in that portion (4) of the layer (3) connections (10) are produced between the fibers (2), **characterized in that**
- a second welding station (9) is provided and the partially compressed and welded portion (4) of the layer (3) can be fed to the second welding station (9) and produces further connections (10) between the fibers (2) and a further compression can be conducted, wherein the device (6) is constructed in such a way that a plurality of welding seams (5) crossing one another are formed by the first welding station (8) and the second welding station (9).

6. Device (6) according to claim 5, wherein said first welding station (8) and said second welding station (9) are operable for roller seam welding.

7. Device (6) according to claim 6, wherein at least one of said first welding station (8) and second welding station (9) has at least two roller electrodes (11) through which the layer (3) having fibers (2) can be passed through and which can conduct passing a current flow through the fibers (2), at least one of said roller electrodes (9) having means for varying the welding position (12).

8. Device (6) according to claim 6 or 7, wherein at least one of said roller electrodes (11) has a plurality of sections (13) for producing a current flow independently of one another through the fibers (2) contacted by said sections (13).

9. Device (6) according to claim 8, wherein said plurality of sections (13) of said at least one roller electrode (11) are offset relative to one another in a transporting direction (16) of the layer (3).

10. Device (6) according to one of claims 6 to 9, wherein at least one of said roller electrodes (11) has a profile (14).

11. Device (6) according to one of claims 6 to 10, wherein at least one of said welding stations (8, 9) has means for varying the position of an axis of rotation (15) of at least one of said roller electrodes (11).

12. Device (6) according to one of claims 6 to 11, wherein means for varying mutually the position of said welding stations (8, 9).

13. Device (6) according to one of claims 6 to 12, wherein at least one of said welding stations (8, 9) has means for providing an inert gas in the vicinity of the welding position (12).

14. Honeycomb body (31), comprising a plurality of structured metal foils (32) and a plurality of fleeces (1), which is constructed in such a way that channels (34) are formed to be passed by exhaust gas in a direction of flow (33), wherein said fleeces (1) comprise metallic fibers (2) of a material resistant to high temperatures and corrosion, **characterized in that** the fleece (1) in one section (4) is repeatedly compressed and comprises welding connections, being produced by a method according to one of claims 1 to 5 or by a device (6) according to one of claims 6 to 13, wherein a plurality of welding seams (5) crossing one another are formed.

15. Use of a honeycomb body (31) according to claim 14 for filtering an exhaust flow.

## Revendications

1. Procédé destiné à la fabrication d'un non tissé (1) de fibres métalliques (2), comprenant au moins les étapes suivantes :
a) Formation d'une couche (3) avec des fibres métalliques (2) et
b) Soudage des fibres (2) entre elles en un non tissé (1), **caractérisé en ce que** l'étape b) comprend la mise en pratique réitérée d'un processus de soudage quant à un tronçon (4) du non tissé, de sorte que ce tronçon (4), soit comprimé encore plus et que des joints soudés supplémentaires soient réalisés.

2. Procédé selon la revendication 1, dans lequel l'étape b) est effectuée par le soudage à la molette.

3. Procédé selon la revendication 1 ou 2, dans lequel durant l'étape b) une pluralité de cordons de soudure (5) est formée qui se croisent.

4. Procédé selon l'une des revendications précédentes, dans lequel durant l'étape b) un gaz protecteur est amené vers le tronçon (4) du non tissé (1).

5. Dispositif (6) pour souder des fibres métalliques (2), comprenant au moins les composants suivants:
- une installation d'apport (7) pour une couche (3) de fibres métalliques (2),
- une première station de soudage (8), dans quel cas un tronçon (4) de la couche (3) est comprimé et dans ce tronçon (4) de la couche (3) des connexions (10) peuvent être générées entre les fibres (2) **caractérisé en ce**
- **qu'**une deuxième station de soudage (9) est mise à disposition et la deuxième station de soudage (9) peut être alimentée par le tronçon (4) partiellement solidifié et soudé (4) de la couche (3) et d'avantage de connexions (10) entre les fibres (2) peuvent être générées et encore une compression, le dispositif (6) étant réalisé de telle manière qu'une pluralité de cordons de soudure (5) sont formés par la première station de soudage (8) et la deuxième station de soudage (9) qui se croisent.

6. Dispositif (6) selon la revendication 5, la première station de soudage (8) et la deuxième station de soudage (9) étant appropriés pour effectuer le soudage à la molette.

7. Dispositif (6) selon la revendication 6, au moins une de la première station de soudage (8) et de la deuxième station de soudage (9) ayant au moins deux électrodes à rouleaux (11) à travers lesquels la couche (3) avec les fibres peut être guidée et lesquels peuvent réaliser un courant électrique à travers les fibres (2), au moins une électrode à rouleaux (9) ayant des moyens pour varier la position de soudage (12).

8. Dispositif (6) selon la revendication 6 ou 7, au moins une électrode à rouleaux (11) étant réalisée avec une pluralité de sections (13) qui peuvent indépendamment les unes des autres générer un courant électrique à travers les fibres (2) contactées par elles.

9. Dispositif (6) selon la revendication 8, la pluralité des sections (13) de l'au moins une électrode à rouleaux (11) étant agencées de manière décalée les unes par rapport aux autres en direction de transport (16) de la couche (3).

10. Dispositif (6) selon l'une des revendications 6 à 9, au moins une électrode à rouleaux (11) étant réalisée avec un profil (14).

11. Dispositif (6) selon l'une des revendications 6 à 10, au moins une station de soudage (8, 9) étant réalisée avec des moyens pour modifier la position d'un axe de rotation (15) d'au moins une électrode à rouleaux (11).

12. Dispositif (6) selon l'une des revendications 6 à 11, des moyens pour modifier la position des stations de soudage (8, 9) l'une par rapport aux autres étant prévus.

13. Dispositif (6) selon l'une des revendications 6 à 12, au moins une station de soudage (8, 9) étant réalisée avec des moyens pour la mise à disposition d'un gaz protecteur dans la région de la position de soudage (12).

14. Corps en nids d'abeilles (31) doté d'une pluralité de feuilles métalliques structurées (32) et d'une pluralité de non tissés (1), lequel corps en nids d'abeilles est construit de manière telle que des canaux (34) traversables pour un gaz d'échappement en une direction d'écoulement (33) sont formés, les non tissés (1) comprenant des fibres métalliques (2) d'un matériau résistant aux températures élevées et à la corrosion, **caractérisé en ce que** dans un tronçon (4) le non tissé (1) est comprimé de manière réitérée et présente des joints soudés, fabriqués avec un procédé selon l'une des revendications 1 à 5 ou avec un dispositif (6) selon l'une des revendications 6 à 13, une pluralité de cordons de soudure (5) étant formée, qui se croisent.

15. Utilisation d'un corps en nids d'abeilles (31) selon la revendication 14 pour filtrer un flux de gaz d'échappement.
